(19) Europäisches Patentamt
European Patent Office
Office européen des brevets

(11) **EP 4 653 088 A1**

(12) **EUROPEAN PATENT APPLICATION**
published in accordance with Art. 153(4) EPC

(43) Date of publication:
26.11.2025 Bulletin 2025/48

(21) Application number: 25738878.5

(22) Date of filing: 06.01.2025

(51) International Patent Classification (IPC):
*B01J 23/00* (2006.01)  *B01J 23/83* (2006.01)
*B01J 23/63* (2006.01)  *B01J 37/02* (2006.01)
*B01J 37/08* (2006.01)  *C01B 3/40* (2006.01)

(52) Cooperative Patent Classification (CPC):
B01J 23/00; B01J 23/63; B01J 23/83; B01J 37/02;
B01J 37/08; C01B 3/40

(86) International application number:
PCT/KR2025/000196

(87) International publication number:
WO 2025/150804 (17.07.2025 Gazette 2025/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.01.2024 KR 20240004616

(71) Applicant: LG CHEM, LTD.
Seoul 07336 (KR)

(72) Inventors:
• CHOI, Jun Seon
Daejeon 34122 (KR)
• CHOI, Jae Soon
Daejeon 34122 (KR)
• KIM, Yongseon
Daejeon 34122 (KR)
• CHO, Jun Yeon
Daejeon 34122 (KR)

(74) Representative: Goddar, Heinz J.
Boehmert & Boehmert
Anwaltspartnerschaft mbB
Pettenkoferstrasse 22
80336 München (DE)

(54) **METHANE-REFORMING CATALYST AND METHOD FOR PRODUCING SAME**

(57) Disclosed is a method for preparing a catalyst for methane reforming, comprising the steps of: preparing a solution comprising a precursor of a perovskite-based compound represented by the above Chemical Formula 1; and coating a carrier with the solution and carrying out heat treatment to obtain a catalyst, wherein the precursor of the perovskite-based compound represented by the above Chemical Formula 1 comprises strontium hydroxide.

**EP 4 653 088 A1**

**Description**

[Technical Field]

The present application claims the benefit of Korean Patent Application No. 10-2024-0004616 filed on January 11, 2024, in the Korean Intellectual Property Office, the entire disclosure of which is incorporated herein by reference.
The present disclosure relates to a catalyst for methane reforming and a method for preparing the same.

[Background Art]

Many studies have been conducted about technologies of carbon dioxide conversion as a part of actions for reducing greenhouse gas caused by global warming. Carbon dioxide reforming, one of the technologies of carbon dioxide conversion, is a technology of allowing methane and carbon dioxide to react with each other to obtain syngas containing hydrogen and carbon monoxide.
Such syngas is a highly valuable substance in terms of development as a raw material of various down-streams. As a method for industrially producing such syngas ($H_2$/CO), reforming of natural gas may be broadly classified into steam reforming, carbon dioxide ($CO_2$) reforming, catalytic partial oxidation, autothermal reforming and tri-reforming, as shown in the following Reaction Formula 1 to Reaction Formula 5:

[Reaction Formula 1]       $CH_4 + H_2O \rightarrow 3H_2 + CO \;\triangle H = 226 \text{ kJ/mol}$

[Reaction Formula 2]       $CH_4 + CO_2 \rightarrow 2H_2 + 2CO \;\triangle H = 261 \text{ kJ/mol}$

[Reaction Formula 3]       $CH_4 + 0.5O_2 \rightarrow 2H_2 + CO \;\triangle H = -44 \text{ kJ/mol}$

[Reaction Formula 4]       Autothermal reforming: Reaction Formula 1 + Reaction Formula 3

[Reaction Formula 5]       Tri-reforming: Reaction Formula 1 + Reaction Formula 2 + Reaction Formula 3

Meanwhile, various types of catalysts may be used for reforming activity in reforming processes. Among such catalysts, when a noble metal catalyst is used in a reforming process, there is an advantage in that high efficiency of conversion of hydrogen from natural gas is obtained, but there is a problem in that cost-efficiency is degraded due to the high cost of noble metal catalyst.
Therefore, a nickel catalyst has been used frequently in a reforming process since it provides high hydrogen conversion efficiency and is relatively cheap. However, in this case, there is a problem in that the nickel catalyst is inactivated due to carbon produced inevitably on the surface of the nickel catalyst.
Therefore, there is a need for developing a catalyst having resistance against carbon deposition and applicable effectively to a methane reforming process.

[Disclosure]

[Technical Problem]

The present disclosure is directed to providing a catalyst for methane reforming and a method for preparing the same.

[Technical Solution]

An exemplary embodiment of the present disclosure provides a method for preparing a catalyst for methane reforming, comprising the steps of:

preparing a solution comprising a precursor of a perovskite-based compound represented by the following Chemical Formula 1; and
coating a carrier with the solution and carrying out heat treatment to obtain a catalyst,
wherein the precursor of the perovskite-based compound represented by the following Chemical Formula 1 comprises strontium hydroxide:

[Chemical Formula 1]  $Sr_{1-x}A_xTi_\alpha B_yO_3$-$\delta$

wherein A is selected from Y, La and lanthanide-series elements,

B is Ni, Co, Fe, Cr, Mo, Ru or Rh,

x is a real number equal to or larger than 0 and less than 1,

y is a real number equal to or larger than 0 and less than 0.3,

$\delta$ is a real number equal to or larger than 0 and less than 1,

$\alpha$ is a real number larger than 0.7 and equal to or less than 1, and

x and y satisfy (x + y) > 0.

Another exemplary embodiment of the present disclosure provides a catalyst for methane reforming obtained by the above-mentioned method for preparing a catalyst for methane reforming.

[Advantageous Effects]

A catalyst for methane reforming according to an exemplary embodiment of the present disclosure is obtained by using strontium hydroxide as a precursor of a perovskite-based compound represented by the above Chemical Formula 1, and thus can inhibit a factor by which a component that may cause a side reaction or cokes is leached from a metal support due to low pH.

In addition, according to an exemplary embodiment of the present disclosure, hydroxycarboxylic acid and polyhydroxy compound used in a process for preparing a catalyst for methane reforming according to the related art are used at a minimized level, and thus it is possible to minimize loss of an active component of catalyst when the perovskite-based compound represented by the above Chemical Formula 1 is coated on the metal support, and to obtain a catalyst comprising the perovskite-based compound represented by the above Chemical Formula 1 coated uniformly on the surface of the metal support.

Therefore, when the catalyst for methane reforming according to an exemplary embodiment of the present disclosure is applied to a methane reforming reaction, it can realize high activity even at a high space velocity and can be operated stably for a long time of 1,000 hours or more with no carbon deposition or sintering phenomenon.

[Best Mode]

Hereinafter, the present disclosure will be explained in more detail.

Throughout the present specification, when a certain member is described to be located "on" another member, this comprises not only the case where the member is in contact with said another member but also the case where another member exists between the two members.

Throughout the present specification, when a part is described to "comprise" a component, this does not exclude the presence of another component but rather implies that further components may be comprised, unless the context specifically states otherwise.

Currently, in the case of catalysts widely used in the field of reformers, powder-type catalysts and pellet-type supported catalysts generally dominate. In the case of the powder-type catalyst, the catalyst has high dispersibility and may show excellent performance, but it is difficult to use the catalyst directly in the industry. For example, when the reformer is driven by using the powder-type catalyst, the catalyst comes out together with a material generated after reaction, and in this case, the powder-type catalyst may be accumulated gradually in a pipe at an outlet, and finally, the pipe may be totally blocked. Therefore, there is a disadvantage in that the powder-type catalyst cannot be used in commercialized reformers used in the industry.

In addition, in the case of the pellet-type supported catalyst, it is currently widely used in industrial reformers. Due to the limitation in the material transfer rate, the pellet-type supported catalyst shows performance inferior to that of the powder-type catalyst when considering only the performance of the catalyst, but there is an advantage in that it can be used for a long time because the support is used. However, in the case of $\gamma$-$Al_2O_3$ pellets, which is commonly used as the pellet-type supported catalyst, it has low structural strength and may be easily broken, and thus there is a disadvantage of generating a differential pressure in a reactor. Additionally, since the pellet-type supported catalyst has a large volume in nature, the volume increases significantly when being used in a high-capacity reformer. In addition, all reforming reactions are sensitive to the reaction temperature, and in the case of conventional pellet-type catalysts, they have significantly low heat conductivity, and thus heat is not evenly distributed throughout the reactor. Further, in the case of a reforming reaction, the reaction is very fast, and thus a pellet-type supported and extrusion molded catalyst shows an effectiveness factor using the catalyst of 0.3 or less, which suggests the disadvantage of poor utilization of the catalyst.

In addition, in a methane dry reforming reaction, since coke generation is reduced as the pressure of the reactor is decreased thermodynamically, cases of using a metal support as a catalyst support are increasing in order to alleviate a drop in pressure in the catalyst layer. However, there have been no cases of commercialization due to side reactions and coke generation caused by the metal components of the metal support itself.

Under these circumstances, the present disclosure is directed to providing a catalyst for methane reforming which uses a metal support having a high heat and mass transfer rate and can inhibit side reactions and coke generation caused by the metal components of the metal support itself, and a method for preparing the same.

In an exemplary embodiment of the present disclosure, the method for preparing a catalyst for methane reforming comprises the steps of: preparing a solution containing a precursor of a perovskite-based compound represented by the following Chemical Formula 1; and coating a carrier with the solution and carrying out heat treatment to obtain a catalyst, wherein the precursor of a perovskite-based compound represented by the following Chemical Formula 1 comprises strontium hydroxide:

[Chemical Formula 1] $\quad Sr_{1-x}A_xTi_{\alpha}B_yO_{3-\delta}$

wherein A is selected from Y, La and lanthanide-series elements,

B is Ni, Co, Fe, Cr, Mo, Ru or Rh,

x is a real number equal to or larger than 0 and less than 1,

y is a real number equal to or larger than 0 and less than 0.3,

$\delta$ is a real number equal to or larger than 0 and less than 1,

$\alpha$ is a real number larger than 0.7 and equal to or less than 1, and

x and y satisfy (x + y) > 0.

In an exemplary embodiment of the present disclosure, the carrier may be a metal support. Herein, the metal support may comprise at least one selected from NiFeCrAl, NiCrAl, Al, stainless steel and Inconel. In addition, the metal support may be a porous metal support, such as metal foam, and may be a metal support having a predetermined shape. Further, the carrier may be an inorganic oxide carrier known to those skilled in the art.

The porous metal support may be a structure having various shapes and may have low heat capacity and high heat transferability to be molded into and used in a desired shape. There is no particular limitation in the shape, size, etc. of the porous metal support. The porous metal support may have a porosity of 10% to 99%, 50% to 96%, or 85% to 96%. The porous metal support may have a cell size of 400 $\mu$m to 1,500 $\mu$m, or 450 $\mu$m to 1,400 $\mu$m. When the porous metal support has a cell size of less than 400 $\mu$m, it is difficult to perform coating of the precursor solution. When the metal support has a cell size of larger than 1,500 $\mu$m, it may have a reduced surface area on which a catalyst can be coated, which is disadvantageous in terms of process and is undesired. The porous metal support may be prepared suitably by those skilled in the art by using a method known in the art considering the above-described material, cell size, porosity, etc. of the porous metal support.

In addition, the metal support having a predetermined shape may use a tubular reactor itself as a support and may also use a metal plate having a shape of spring with an increased surface area.

The method for preparing a catalyst for methane reforming according to an exemplary embodiment of the present disclosure comprises a step of preparing a solution containing a precursor of a perovskite-based compound represented by the above Chemical Formula 1.

According to the related art, an alkaline component is added to a catalyst precursor solution to form precipitate for the purpose of preparation of a powder-type catalyst. However, a catalyst for methane reforming according to an exemplary embodiment of the present disclosure is a supported catalyst comprising a carrier coated with a catalyst component and is different from the conventional powder-type catalyst. Therefore, according to an exemplary embodiment of the present disclosure, the solution containing a precursor of a perovskite-based compound represented by the above Chemical Formula 1 may be applied in the form of sol or gel.

The precursor of a perovskite-based compound is a precursor of a metal forming a perovskite-based compound, and the molar ratio of the metal of the perovskite-based compound may be controlled by adjusting the content of the precursor. In addition, there is no particular limitation in the precursors of the other metals, except strontium hydroxide, as the precursor of the metal.

In an exemplary embodiment of the present disclosure, strontium hydroxide may be $Sr(OH)_2 \cdot 9H_2O$. Strontium carbonate, strontium acetate, et. may be used instead of strontium hydroxide, but they provide an insufficient effect of increasing pH. Therefore, it is preferred to use strontium hydroxide.

In an exemplary embodiment of the present disclosure, the solution containing a precursor of a perovskite-based compound represented by Chemical Formula 1 may have a pH of 2.5 to 3.7, or 3.0 to 3.5.

The solution containing a precursor of a perovskite-based compound represented by Chemical Formula 1 may be prepared by the Pechini method as follows. When mixing an aqueous solution of oxide or salt required for preparation with a hydroxycarboxylic acid, a chelate reaction occurs to form a complex ring compound around metal cations. Then, when a polyhydroxy compound is added thereto and the resultant mixture is heated at 150°C to 250°C to polymerize the formed chelate compound and then the remaining water is removed, it is possible to obtain a solid polymer resin that may be referred to as a precursor of a catalyst component. According to the related art, citric acid and ethylene glycol were used with strontium nitrate, nickel nitrate, titanium isopropoxide, etc. in order to prepare a perovskite-based material. The coating solution prepared according to the related art has a pH of 0.1 to 0.5, and thus there is a significant limitation in a process for preparing a catalyst for dry reforming of methane. Due to such high acidity, a system for preparing a catalyst requires a special material, and additional coating with a protective layer is required to inhibit a side effect of leaching in the use of a metal support, or the number of reusing the coating solution is required to be limited.

According to an exemplary embodiment of the present disclosure, strontium hydroxide is used instead of conventionally used strontium nitrate, and thus it is possible to prepare a coating solution having a pH of 2.5 to 3.7. In this manner, it is possible to overcome the above-mentioned limitation in the material for a system, to avoid a need for an additional protective layer for enhancing a catalytic effect and to inhibit a side effect caused by the reuse of a coating solution, etc.

According to the related art, in a process of coating a catalyst component on the surface of a metal support, a loss of activity of the coated catalyst may occur due to undesired components caused by a leaching phenomenon and washing action. Particularly, in preparing a sol solution through the Pechini method widely known to date, the method is carried out under strong acid (pH < 0.3) atmosphere since nitrate is used as a precursor of a catalyst component. However, when using nitrate as a precursor of a catalyst component, a sol solution having a significantly low pH is formed, and thus a metal component of the metal support is leached during a step of coating the metal support with the catalyst component and a component unfavorable to catalytic activity is also added to cause a side effect of degradation of catalytic activity. In addition, although pH may be slightly increased by adding an alcohol component when using nitrate as a precursor of a catalyst component, this causes a significant increase in processing cost, which is not preferred in terms of commercial production.

In other words, to solve the above-mentioned problems, pH may be increased by using strontium hydroxide instead of conventionally used nitrate according to an exemplary embodiment of the present disclosure, thereby providing an advantage of expanding one's option in selecting the material of a reactor when preparing a large amount of sol solution.

In an exemplary embodiment of the present disclosure, $(\alpha + y)$ in the above Chemical Formula 1 may be 1. In addition, in an exemplary embodiment of the present disclosure, $(\alpha + y)$ in Chemical Formula 1 may be a real number larger than 0.90 and less than 1. B (such as Ni) in Chemical Formula 1 partially substitutes for Ti, and theoretically $(\alpha + y)$ is 1 according to stoichiometry. However, when Ti is introduced at a slightly insufficient amount as compared to the stoichiometric ratio in preparing a perovskite-based compound represented by Chemical Formula 1, Ti in Chemical Formula 1 may be substituted with B (such as Ni) more easily.

In an exemplary embodiment of the present disclosure, Chemical Formula 1 may be represented by the following Chemical Formula 2 or 3, but is not limited thereto:

[Chemical Formula 2]　　　　　　$SrTi_{\alpha}B_yO_{3-\delta}$

[Chemical Formula 3]　　　　　　$Sr_{1-x}Y_xTi_{\alpha}B_yO_{3-\delta}$

wherein B is Ni or Rh,
x is a real number larger than 0 and less than 1,
y is a real number larger than 0 and less than 0.3,
$\delta$ is a real number larger than 0 and less than 1, and
$\alpha$ is a real number larger than 0.7 and equal to or less than 1.

In an exemplary embodiment of the present disclosure, the carrier may be coated with the solution by using a method known to those skilled in the art, such as dip coating, wash coating, or the like, but are not limited thereto.

In an exemplary embodiment of the present disclosure, the heat treatment process may comprise a drying step and firing step. The drying step may be carried out at a temperature of 50°C to 150°C for 1 hour to 48 hours, or at a temperature of 60°C to 100°C for 5 hours to 36 hours, but is not limited thereto. In addition, the firing step may be carried out at a temperature of 350°C to 1,100°C for 1 hour to 10 hours under the atmosphere of air, or at a temperature of 500°C to 1,000°C for 1.5 hours to 8 hours under the atmosphere of air, but is not limited thereto. When the firing step is carried out at a temperature of lower than 350°C, a perovskite phase cannot be formed properly. When the firing step is carried out at a temperature of higher than 1,100°C, the metal support may undergo degradation of durability undesirably.

In an exemplary embodiment of the present disclosure, the method may further comprise a step of weighing the coating layer supported on the carrier, after carrying out the heat treatment process. In addition, the solution may be coated until a desired amount of catalyst is supported in the carrier by weighing the coating layer supported on the carrier, and then the step of carrying out the heat treatment process may be performed twice to 10 times repeatedly.

Another exemplary embodiment of the present disclosure provides a catalyst for methane reforming obtained by the above-described method for preparing a catalyst for methane reforming.

The catalyst for methane reforming according to another exemplary embodiment of the present disclosure comprises: a carrier; and a coating layer provided on the carrier and comprising a perovskite-based compound represented by the above Chemical Formula 1.

In an exemplary embodiment of the present disclosure, the content of the coating layer comprising a perovskite-based compound represented by the Chemical Formula 1 may be 3 wt% to 40 wt%, 6 wt% to 35 wt%, or 7 wt% to 30 wt%, based on the total weight of the catalyst for methane reforming. When the content of the coating layer comprising a perovskite-based compound represented by the Chemical Formula 1 is less than may be 3 wt% based on the total weight of the catalyst for methane reforming, a relatively smaller number of active spots is present on the catalyst surface, resulting in degradation of reactivity undesirably. In addition, when the content of the coating layer comprising a perovskite-based compound represented by the Chemical Formula 1 is larger than 40 wt% based on the total weight of the catalyst for methane reforming, a relatively larger amount of catalyst components is present as compared to the carrier, thereby making it difficult to retain the pore structure and to accomplish binding of catalyst components with the carrier, resulting in degradation of benefits of methane reforming reaction.

In an exemplary embodiment of the present disclosure, the catalyst for methane reforming may be applied to steam reforming, carbon dioxide ($CO_2$) reforming, catalytic partial oxidation, autothermal reforming, tri-reforming or mixed reforming, and there is no particular limitation in the methane reforming process.

Since the catalyst for methane reforming according to an exemplary embodiment of the present disclosure is prepared by using strontium hydroxide as a precursor of a perovskite-based compound represented by the above Chemical Formula 1, it is possible to inhibit a component capable of causing a side reaction or coke generation from being leached from a metal support due to a low pH.

In addition, since hydroxycarboxylic acid and polyhydroxy compounds used in a process for preparing a catalyst for methane reforming according to the related art are used at a minimized level, thereby preventing popcorn-like formation when the perovskite-based compound represented by Chemical Formula 1 is coated on the metal support, it is possible to minimize loss of an active component of catalyst and to obtain a catalyst comprising the perovskite-based compound represented by the above Chemical Formula 1 coated uniformly on the surface of the metal support.

Therefore, when the catalyst for methane reforming according to an exemplary embodiment of the present disclosure is applied to a methane reforming reaction, it can realize high activity even at a high space velocity and can be operated stably for a long time of 1,000 hours or more with no carbon deposition or sintering phenomenon.

[Mode for Invention]

Hereinafter, the present disclosure is described in detail through examples. However, the examples according to the present disclosure may be changed into several different forms, and the scope of the present disclosure is not to be interpreted as being limited to the examples described below. The examples of the present specification are provided to describe the present disclosure more fully to those having ordinary knowledge in the art.

<Examples>

**<Example 1>**

A perovskite-based coating solution was prepared through the Pechini method. Strontium hydroxide ($Sr(OH)_2 \cdot 9H_2O$) and nickel nitrate ($Ni(NO_3)_2$) were dissolved together with malic acid in distilled water at 80°C. Then, glycerin was further introduced and titanium isopropoxide ($Ti(OCH(CH_3)_2)_4$) was introduced, and the temperature was maintained until a clear solution was obtained. Nickel was contained at 3 mol% based on titanium. Herein, the coating solution had a pH of 3.5.

A porous metal support (NiCrAl, average cell size: 1,200 $\mu$m) was coated with the perovskite-based coating solution through dip coating (coating layer was formed), the coated porous metal support was dried at 150°C for 5 hours, and then heat treatment was carried out at 900°C under the atmosphere of air for 5 hours. The dip coating, drying and heat treatment of the perovskite-based solution were repeated several times to obtain a catalyst comprising the porous metal support provided with a coating layer ($SrTi_{0.97}Ni_{0.03}O_{3-\delta}$, $0 < \delta < 1$) finally. Based on the total weight of the catalyst for methane reforming, the content of the perovskite-based compound represented by the above Chemical Formula 1($SrTi_{0.97}Ni_{0.03}O_{3-\delta}$, $0 < \delta < 1$) was 10.8 wt%.

The content of the perovskite-based compound represented by Chemical Formula 1 ($SrTi_{0.97}Ni_{0.03}O_{3-\delta}$, $0 < \delta < 1$) can be calculated through the following Mathematical Formula 1:

Content of perovskite-based compound represented by Chemical Formula 1 (wt%) =
(Total weight of catalyst - Weight of porous metal support)/(Total weight of catalyst) $\times$ 100          [Mathematical Formula 1]

**<Example 2>**

A catalyst comprising a porous metal support provided with a coating layer ($Sr_{0.92}Y_{0.08}Ti_{0.97}Ni_{0.03}O_{3-\delta}$, $0 < \delta < 1$) was obtained in the same manner as Example 1, except that yttrium nitrate ($Y(NO_3)_2$) was further used at 8 mol% based on strontium.

Herein, the coating solution had a pH of 3.0, and the content of the perovskite-based compound represented by the above Chemical Formula 1 ($Sr_{0.92}Y_{0.08}Ti_{0.97}Ni_{0.03}O_{3-\delta}$, $0 < \delta < 1$) was 14.1 wt%, based on the total weight of the catalyst for methane reforming.

**<Comparative Example 1>**

Strontium nitrate ($Sr(NO_3)\cdot3H_2O$) and nickel nitrate ($Ni(NO_3)_2$) were dissolved together with citric acid in distilled water at 80°C. Then, titanium isopropoxide ($Ti(OCH(CH_3)_2)_4$) was dissolved in ethylene glycol at 60°C, the resultant solution was mixed with the distilled water solution, and the temperature was maintained until a clear solution was obtained. Nickel was contained at 3 mol% based on titanium. Herein, the coating solution had a pH of 0.30.

A porous metal support (NiCrAl, average cell size: 1,200 $\mu$m) was coated with the perovskite-based coating solution through dip coating (coating layer was formed), the coated porous metal support was dried at 150°C for 5 hours, and then heat treatment was carried out at 900°C under the atmosphere of air for 5 hours. The dip coating, drying and heat treatment of the perovskite-based solution were repeated several times to obtain a catalyst comprising the porous metal support provided with a coating layer ($SrTi_{0.97}Ni_{0.03}O_{3-\delta}$, $0 < \delta < 1$) finally. Based on the total weight of the catalyst for methane reforming, the content of the perovskite-based compound represented by the above Chemical Formula 1($SrTi_{0.97}Ni_{0.03}O_{3-\delta}$, $0 < \delta < 1$) was 15.1 wt%.

**<Comparative Example 2>**

A catalyst comprising a porous metal support provided with a coating layer ($Sr_{0.92}Y_{0.08}Ti_{0.97}Ni_{0.03}O_{3-\delta}$, $0 < \delta < 1$) was obtained in the same manner as Comparative Example 1, except that yttrium nitrate ($Y(NO_3)_2$) was further used at 8 mol% based on strontium.

Herein, the coating solution had a pH of 0.30, and the content of the perovskite-based compound represented by the above Chemical Formula 1 ($Sr_{0.92}Y_{0.08}Ti_{0.97}Ni_{0.03}O_{3-\delta}$, $0 < \delta < 1$) was 15 wt%, based on the total weight of the catalyst for methane reforming.

**<Test Example 1> Evaluation of dry reforming of methane**

A fixed bed reaction system was introduced to carry out dry reforming of methane. Each of the catalysts (about 2.2 g) according to Examples and Comparative Examples was filled in a quartz tube reactor (inner diameter = 1/2 inch, length = 50 cm). First, reduction was carried out at 800°C under the condition of 10% $H_2/N_2$ for 2 hours, and then catalytic reaction was carried out for 28 hours.

Gas composition: $CH_4$: $CO_2$: $N_2$ = 1 : 1.1 : 0.1
Flow rate: GHSV (Gas Hour Space Velocity) = 1,500 $hr^{-1}$ (on the basis of $CH_4$)
Reaction temperature: 850°C
Reaction pressure: 5 bar

The product gas was analyzed in terms of composition by using gas chromatography (GC) to calculate a reaction conversion ratio after carrying out the reaction for 28 hours. The results are shown in the following Table 1.

$$\text{Conversion ratio } (Xi, \%) = [(Fi_{in} - Fi_{out})/Fi_{in}] \times 100 \ (Fi = \text{flow rate of } i)$$

In addition, a ratio of decrease in coke generation was calculated based on the coke generation amount of Comparative Example 1 by using the following Formula. The results are shown in Table 1.

Ratio of decrease in coke generation (%) = (Coke generation amount of Comparative Example 1 - Coke generation amount of Example or Comparative Example)/(Coke generation amount of Comparative Example 1) $\times$ 100

**<GC Analysis Condition>**

1) GC model: Agilent 6890
2) Oven temperature: 40°C/7min-90°C/5min-180°C/6min
3) Detector: Thermal conductivity detector (TCD), 250°C
4) Sample loop: 0.25 mL
5) Valve box Temperature: 150°C

[Table 1]

| Catalyst type | $CH_4$ conversion ratio (%) | $CO_2$ conversion ratio (%) | Ratio of decrease in coke generation (%) |
|---|---|---|---|
| Example 1 | 82 | 86 | 16.45 |
| Example 2 | 80 | 84 | 4.76 |
| Comparative Example 1 | 83 | 87 | 0 |
| Comparative Example 2 | 83 | 86 | -10.39 |

In the results of Table 1, the fact that the ratio of decrease in coke generation in Comparative Example 2 has a negative (-) value indicates that the result of Comparative Example 2 does not provide a decrease in coke generation amount but rather provides an increase in coke generation amount as compared to Comparative Example 1.

As can be seen from the above results, the catalyst for methane reforming according to an exemplary embodiment of the present disclosure is prepared by using strontium hydroxide, and thus provides a decrease in coke generation amount as compared to the catalyst for methane reforming prepared by using strontium nitrate like Comparative Examples. Therefore, it can be seen that the catalyst for methane reforming according to an exemplary embodiment of the present disclosure can reduce side reactions caused by the metal support and the coating layer containing a perovskite-based compound.

In addition, the above results are obtained after carrying out catalytic reaction for 28 hours. It is apparent to those skilled in the art that such a difference between the ratio of decrease in coke generation of Examples and that of Comparative Examples is increased when catalytic reaction is carried out for 1,000 hours or more as in applications to actual commercialized processes.

As a result, when the catalyst for methane reforming according to an exemplary embodiment of the present disclosure is applied to methane reforming, it can realize high activity even at a high space velocity and can be operated stably for a long time of 1,000 hours or more with no carbon deposition or sintering phenomenon.

**Claims**

**1.** A method for preparing a catalyst for methane reforming, comprising the steps of:

preparing a solution comprising a precursor of a perovskite-based compound represented by the following Chemical Formula 1; and
coating a carrier with the solution and carrying out heat treatment to obtain a catalyst,
wherein the precursor of the perovskite-based compound represented by the following Chemical Formula 1 comprises strontium hydroxide:

[Chemical Formula 1] $\qquad Sr_{1-x}A_xTi_\alpha B_yO_{3-\delta}$

wherein A is selected from Y, La and lanthanide-series elements,
B is Ni, Co, Fe, Cr, Mo, Ru or Rh,
x is a real number equal to or larger than 0 and less than 1,
y is a real number equal to or larger than 0 and less than 0.3,
$\delta$ is a real number equal to or larger than 0 and less than 1,
$\alpha$ is a real number larger than 0.7 and equal to or less than 1, and

x and y satisfy (x + y) > 0.

2. The method for preparing the catalyst for methane reforming according to claim 1, wherein the carrier is a metal support.

3. The method for preparing the catalyst for methane reforming according to claim 2, wherein the metal support comprises at least one selected from NiFeCrAl, NiCrAl, Al, stainless steel and Inconel.

4. The method for preparing the catalyst for methane reforming according to claim 1, wherein the solution comprising the precursor of the perovskite-based compound represented by Chemical Formula 1 has a pH of 2.5 to 3.7.

5. The method for preparing the catalyst for methane reforming according to claim 1, wherein the strontium hydroxide is $Sr(OH)_2 \cdot 9H_2O$.

6. The method for preparing the catalyst for methane reforming according to claim 1, wherein Chemical Formula 1 is represented by the following Chemical Formula 2 or 3:

[Chemical Formula 2]     $SrTi_\alpha B_y O_{3-\delta}$

[Chemical Formula 3]     $Sr_{1-x}Y_x Ti_\alpha B_y O_{3-\delta}$

wherein B is Ni or Rh,
x is a real number larger than 0 and less than 1,
y is a real number larger than 0 and less than 0.3,
$\delta$ is a real number larger than 0 and less than 1, and
$\alpha$ is a real number larger than 0.7 and equal to or less than 1.

7. 8. A catalyst for methane reforming obtained by the method as defined in any one of claims 1 to 6.

## INTERNATIONAL SEARCH REPORT

| International application No. |
| --- |
| **PCT/KR2025/000196** |

| | |
| --- | --- |
| **A.** | **CLASSIFICATION OF SUBJECT MATTER** |

**B01J 23/00**(2006.01)i; **B01J 23/83**(2006.01)i; **B01J 23/63**(2006.01)i; **B01J 37/02**(2006.01)i; **B01J 37/08**(2006.01)i; **C01B 3/40**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

B01J 23/00(2006.01); B01J 21/06(2006.01); B01J 23/10(2006.01); B01J 37/03(2006.01); B01J 37/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 페로브스카이트(perovskite), 메탄 개질(methane reforming), 스트론튬 수산화물(strontium hydroxide)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | KR 10-2023-0072397 A (LG CHEM, LTD.) 24 May 2023 (2023-05-24)<br>See paragraph [0085]; example 2; and claims 9 and 11. | 1-3,5-7 |
| A | | 4 |
| A | KR 10-2023-0073076 A (LG CHEM, LTD.) 25 May 2023 (2023-05-25)<br>See entire document. | 1-7 |
| A | KR 10-2023-0057253 A (LG CHEM, LTD.) 28 April 2023 (2023-04-28)<br>See entire document. | 1-7 |
| A | KR 10-2020-0062459 A (KOREA INSTITUTE OF SCIENCE AND TECHNOLOGY) 04 June 2020 (2020-06-04)<br>See entire document. | 1-7 |

| | | |
| --- | --- | --- |
| ✔ Further documents are listed in the continuation of Box C. | | ✔ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 April 2025** | **25 April 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/000196** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2019-0329223 A1 (SABIC GLOBAL TECHNOLOGIES, B.V.) 31 October 2019 (2019-10-31) See entire document. | 1-7 |

Form PCT/ISA/210 (second sheet) (July 2022)

## INTERNATIONAL SEARCH REPORT
### Information on patent family members

International application No.

**PCT/KR2025/000196**

| Patent document cited in search report | | | Publication date (day/month/year) | Patent family member(s) | | | Publication date (day/month/year) |
|---|---|---|---|---|---|---|---|
| KR | 10-2023-0072397 | A | 24 May 2023 | CN | 116829259 | A | 29 September 2023 |
| | | | | EP | 4257235 | A1 | 11 October 2023 |
| | | | | EP | 4257235 | A4 | 10 July 2024 |
| | | | | EP | 4257235 | B1 | 12 February 2025 |
| | | | | JP | 2024-503471 | A | 25 January 2024 |
| | | | | JP | 7648288 | B2 | 18 March 2025 |
| | | | | US | 2024-0100508 | A1 | 28 March 2024 |
| | | | | WO | 2023-090583 | A1 | 25 May 2023 |
| KR | 10-2023-0073076 | A | 25 May 2023 | CN | 116761674 | A | 15 September 2023 |
| | | | | EP | 4257236 | A1 | 11 October 2023 |
| | | | | EP | 4257236 | A4 | 10 July 2024 |
| | | | | JP | 2024-503472 | A | 25 January 2024 |
| | | | | US | 2024-0299924 | A1 | 12 September 2024 |
| | | | | WO | 2023-090585 | A1 | 25 May 2023 |
| KR | 10-2023-0057253 | A | 28 April 2023 | CN | 116635145 | A | 22 August 2023 |
| | | | | EP | 4245409 | A1 | 20 September 2023 |
| | | | | EP | 4245409 | A4 | 10 July 2024 |
| | | | | JP | 2024-500507 | A | 09 January 2024 |
| | | | | KR | 10-2023-0057254 | A | 28 April 2023 |
| | | | | US | 2024-0116032 | A1 | 11 April 2024 |
| | | | | WO | 2023-068497 | A1 | 27 April 2023 |
| KR | 10-2020-0062459 | A | 04 June 2020 | KR | 10-2267408 | B1 | 23 June 2021 |
| US | 2019-0329223 | A1 | 31 October 2019 | CN | 109890501 | A | 14 June 2019 |
| | | | | WO | 2018-085820 | A1 | 11 May 2018 |

Form PCT/ISA/210 (patent family annex) (July 2022)

**EP 4 653 088 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240004616